Europäisches Patentamt

European Patent Office

Office européen des brevets

(19)

(11)  EP 0 816 795 B1

(12)  **FASCICULE DE BREVET EUROPEEN**

(45) Date de publication et mention
de la délivrance du brevet:
**12.11.2003  Bulletin 2003/46**

(51) Int Cl.⁷: $G01B\ 5/06$, G01B 3/00

(21) Numéro de dépôt: **97110258.7**

(22) Date de dépôt: **24.06.1997**

(54) **Instrument pour mesurer des longueurs ou des angles**

Längen- oder Winkelmessinstrument

Instrument for measuring lengths or angles

(84) Etats contractants désignés:
**DE FR GB IT**

(30) Priorité: **02.07.1996  CH 164896**

(43) Date de publication de la demande:
**07.01.1998  Bulletin 1998/02**

(73) Titulaire: **Sylvac S.A.**
**1023 Crissier (CH)**

(72) Inventeurs:
• **Meyer, Hans Ulrich**
**1110 Morges (CH)**

• **Clerc, Daniel**
**1023 Crissier (CH)**

(74) Mandataire: **Micheli & Cie**
**Rue de Genève 122,**
**Case Postale 61**
**1226 Genève-Thonex (CH)**

(56) Documents cités:
**DE-A- 3 719 509**            **DE-A- 3 740 518**
**FR-A- 2 644 577**

## Description

La présente invention concerne un instrument pour mesurer des longueurs ou des angles comprenant un rail, un chariot disposé sur ce rail, le chariot présentant une première partie susceptible d'être entraînée le long de ce rail et une seconde partie entraînée par la première partie le long du rail et portant une touche de mesure destinée à coopérer avec une pièce à mesurer, la seconde partie étant susceptible d'être déplacée par rapport à la première partie contre l'effet d'un élément de retenue d'une position de repos vers au moins une position de mesure dans laquelle la touche de mesure exerce une force de mesure prédéterminée sur la pièce à mesurer, l'instrument comprenant un organe moteur agencé de façon à entraîner la première partie le long du rail, un capteur de position susceptible de mesurer le déplacement relatif entre les deux parties du chariot, et une unité de commande comprenant des premiers et seconds moyens de commande, les premiers moyens de commande étant agencés de façon à recevoir des signaux correspondant à la position relative entre les deux parties dudit capteur de position et à commander au moyen de premières consignes avant ou arrière l'organe moteur de manière qu'il établisse une position relative constante entre les deux parties correspondant à la position de mesure, les seconds moyens de commande étant susceptibles de recevoir des instructions extérieures et de commander au moyen de secondes consignes avant ou arrière l'organe moteur de manière à déplacer la première partie au moins lorsque la seconde partie occupe ladite position de repos.

On connaît un instrument du type précité décrit dans le document DE 37 19 509 A1. Cet instrument connu possède un chariot avec une touche de mesure entraîné par un moteur au moyen d'une courroie en acier. Un dispositif destiné à générer une force de mesure est monté entre le chariot et la courroie en acier et comprend une tige solidaire de la courroie. Cette tige est entourée par deux ressorts s'appuyant d'une part sur les parois du chariot et d'autre part sur une pièce médiane. Une unité de commande est prévue pour actionner le moteur soit de façon à obtenir une force de mesure prédéterminée soit pour déplacer le chariot vers une position donnée.

On connaît en outre des instruments de mesure permettant de régler la force de mesure par les documents EP-A-0 223 736 et EP-A-0 421 922.

La présente invention a pour but d'améliorer les instruments connus, de permettre un fonctionnement exempt de toute erreur, précis et simple, tout en facilitant la manipulation par l'utilisateur.

L'instrument selon la présente invention est caractérisé à cet effet par le fait que l'unité de commande est agencée

    a) de façon à rendre actifs les seconds moyens de commande lorsque lesdits signaux reçus du capteur de position sont inférieurs à une limite supérieure et supérieurs à une limite inférieure,
    b) de façon à rendre actifs les premiers moyens de commande, lorsque lesdits signaux reçus du capteur de position sont soit supérieurs à la limite supérieure pour établir une première position de mesure entre les deux parties du chariot, soit inférieurs à la limite inférieure pour obtenir une seconde position de mesure entre les deux parties du chariot,
    c) de façon à inhiber la seconde consigne avant lorsque lesdits signaux reçus sont supérieurs à la limite supérieure,
    d) de façon à inhiber la seconde consigne arrière lorsque lesdits signaux reçus sont inférieurs à la limite inférieure et
    e) de façon à inhiber les premières consignes avant et arrière soit lorsque les signaux reçus sont inférieurs à la limite inférieure et que la seconde consigne avant est activée, soit lorsque les signaux reçus sont supérieurs à la limite supérieure et que la seconde consigne arrière est activée.

Grâce à ces caractéristiques, l'instrument permet des mesures avec une grande sécurité de fonctionnement évitant toute fausse manipulation, avec une précision élevée, tout en étant d'une construction simple, précise et fiable.

Les interactions entre le mode utilisateur et le positionnement automatisé sont ainsi réalisées de façon simple et précise permettant d'éviter des erreurs de mesure ou de fonctionnement et facilitant la manipulation par l'utilisateur.

Le capteur de position est favorablement agencé de façon à travailler avec une grandeur physique variant sensiblement linéairement avec le déplacement relatif entre les deux parties du chariot.

Il peut être constitué par un capteur à effet Hall. Ces capteurs ont l'avantage d'un poids réduit, d'un fonctionnement stable et précis, d'une construction simple et d'un faible coût de revient.

De façon avantageuse, l'unité de commande comprend un circuit logique coopérant au moins avec deux premiers comparateurs agencés de façon à comparer les signaux reçus du capteur de position avec lesdites limites supérieure et inférieure et agencés de façon à actionner au moins deux premiers commutateurs ayant chacun une première entrée susceptible de recevoir lesdites premières consignes, une seconde entrée susceptible de recevoir lesdites secondes consignes, et une sortie agencée de façon à commander la rotation de l'organe moteur.

On obtient ainsi une commande électronique d'un fonctionnement fiable et adapté à l'application concernée tout en ayant un nombre de composants faible.

Favorablement, les signaux reçus du capteur sont amenés à une première entrée de deux premiers amplificateurs dont les gains sont inversés l'un par rapport à l'autre, dont la sortie de chacun est reliée à l'un des premiers commutateurs et dont la seconde entrée est susceptible d'être reliée pour chacun à une première ou une seconde tension de décalage, deux seconds commutateurs commandés par l'un des premiers comparateurs étant destinés à commuter la seconde entrée entre la première et la seconde tension de décalage selon que la position de mesure est supérieure ou inférieure à au moins une desdites limites.

Ces caractéristiques permettent une unité de commande d'une construction très fiable et d'un prix de revient peu élevé.

Le moteur est de préférence branché au centre d'un pont en H dont la branche supérieure est reliée par l'intermédiaire de deux seconds amplificateurs aux premiers commutateurs et dont la branche inférieure est reliée à ces derniers par l'intermédiaire de deux seconds comparateurs destinés à comparer les consignes sortant des premiers commutateurs à un seuil d'enclenchement du moteur.

Ladite branche inférieure est alors très avantageusement reliée à un troisième amplificateur dont la sortie est reliée aux entrées desdits seconds amplificateurs de façon à assurer une vitesse stable du moteur sous différentes conditions de charge.

Ces caractéristiques assurent une compensation de l'effet de la résistance interne du moteur, ce qui est particulièrement utile à basse vitesse où des variations du couple de charge entraînent des variations de vitesse importantes. Ceci permet de maintenir une vitesse stable, sans pour autant intégrer un tachymètre.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution.

Les figures 1 et 2 sont des vues de face et latérale de ce mode d'exécution.

Les figures 3 à 5 montrent des diagrammes illustrant le mode de fonctionnement de l'unité de commande de l'instrument.

La figure 6 représente un schéma de principe électronique de cette unité de commande.

Le mode d'exécution décrit se réfère à un instrument pour mesurer des longueurs selon un axe vertical, mais il pourrait facilement être adapté à un instrument pour mesurer des longueurs d'une orientation horizontale ou quelconque ou pour mesurer des angles.

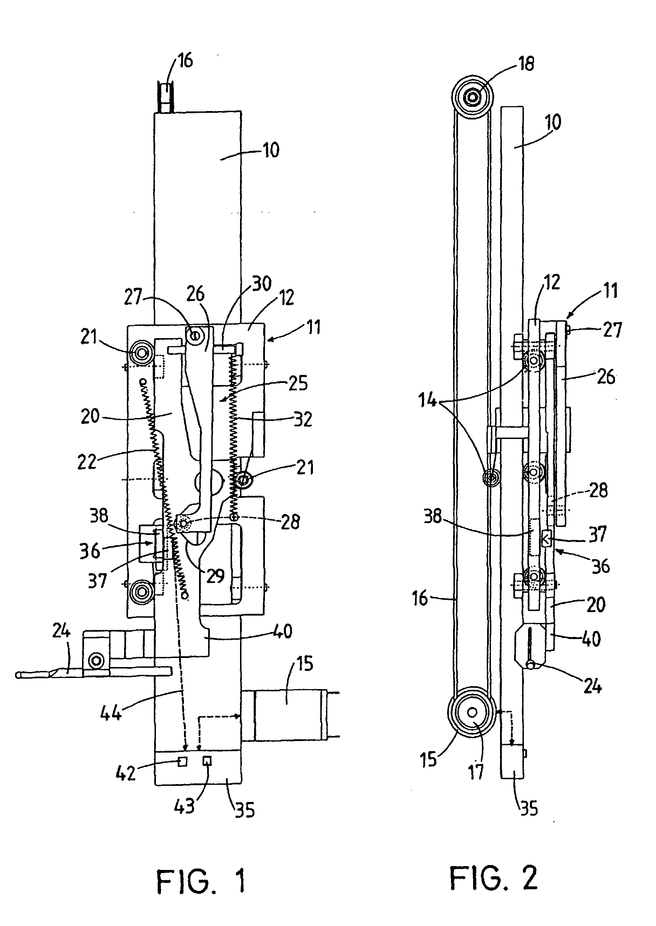

L'instrument pour mesurer des longueurs comprend, en référence aux figures 1 et 2, une colonne ou un rail de mesure 10 sur lequel est monté de façon coulissante un chariot 11. Ce dernier est agencé en deux parties dont une première partie forme un curseur d'entraînement 12 monté grâce à des roulements 14 sur la colonne 10. Un moteur 15 est destiné à déplacer ce curseur d'entraînement 12 par l'intermédiaire d'une courroie 16 disposée sur des galets 17,18 dont les axes sont solidaires de la colonne. Le poids du chariot 11 est avantageusement compensé par un dispositif à contrepoids ou à un ressort, non illustré, prenant appui sur la colonne 10, comme cela est décrit dans les demandes de brevets EP-A-0421922 et EP-A-0223736.

La deuxième partie du chariot 11 est constituée par un curseur de mesure 20 monté de façon coulissante sur le curseur d'entraînement 12 grâce à des roulements 21. Un ressort 22 relie les deux curseurs 12,20 et est susceptible de compenser le poids du curseur de mesure 20 suspendu au curseur d'entraînement 12.

Le curseur de mesure 20 est muni d'une touche de mesure 24 destinée à entrer en contact avec une pièce à mesurer. Un dispositif de force de mesure 25 agencé entre les deux curseurs 12,20 détermine une position de repos entre les deux curseurs 12,20 et produit une force ou pression de mesures croissante lorsque la touche 24 est entrée en contact par le haut ou par le bas avec l'objet à mesurer et que le curseur de transport 12 est déplacé au-delà de la position de contact.

Le dispositif 25 est constitué par un levier 26 monté pivotant en 27 sur le curseur d'entraînement 12 et muni à son extrémité libre d'un roulement 28 coopérant avec une surface en V 29 formant une came sur le curseur de mesure 20. Le levier 26 porte en outre une vis 30 dont la position longitudinale sur le levier 26 est réglable. Un ressort 32 est tendu entre l'extrémité libre de la vis 30 et le curseur de transport 12 et agencé de façon à solliciter le roulement 28 en direction de la surface en V 29 pour déterminer la position de repos entre les deux curseurs 12,20. La force avec laquelle le roulement 28 est sollicitée contre la surface en V 29 peut être ajustée au moyen de la vis 30.

L'instrument comprend en outre une unité de contrôle électronique 35 agencée de façon à commander le fonctionnement, vitesse et sens de rotation, du moteur 15 conformément à des consignes de fonctionnement particulières décrites plus loin.

Un capteur de position 36 détermine le déplacement ou la position relative entre les deux curseurs 12,20 et transmet des consignes de position, à savoir des signaux correspondant à la position relative déterminée, à l'unité de contrôle électronique 35. Ce capteur travaille de préférence avec une grandeur physique variant sensiblement linéairement avec la position relative. En employant comme grandeur physique le champ magnétique, on utilise avantageusement un capteur à effet Hall linéaire 37 monté sur le curseur de mesure 20 et coopérant avec un aimant permanent 38 fixé en regard sur le curseur d'entraînement 12.

Le curseur de mesure 20 porte encore un dispositif de mesure 40 coopérant avec une règle non illustrée solidaire de la colonne 10 et destiné à indiquer précisément la position de hauteur de la touche de mesure 24 au moyen d'un dispositif d'affichage. Ce dispositif de mesure pourra par exemple être constitué par le dispositif capacitif décrit dans le document EP-A-0271436.

L'unité de contrôle électronique 35 est agencée de façon à commander la vitesse et le sens de rotation avant ou arrière du moteur 15 soit suite à des consignes de vitesse avant ou arrière fournies par des touches 42,43 actionnées par l'utilisateur, soit suite à des consignes de position 44 fournies par le capteur de position 36. Conformément au principe général de mesure, on déplace le curseur d'entraînement 12 selon les consignes de vitesse jusqu'à ce que la touche de mesure 24 vienne en contact avec la pièce à mesurer pour donner une certaine pression de mesure par déplacement relatif entre les deux curseurs 12, 20. Ce déplacement relatif atteint, l'unité de contrôle 35 règle le fonctionnement du moteur 15, à savoir son sens de rotation et sa vitesse, automatiquement en fonction des consignes de position 44 fournis par le capteur 36 pour amener le curseur d'entraînement 12 dans une position de mesure telle qu'il existe un décalage supérieur ou inférieur prédéterminé entre les deux curseurs 12,20 par rapport à la position de repos correspondant à une force de mesure donnée.

Lorsque la touche de mesure 24 se déplace, le moteur 15 déplace automatiquement le curseur d'entraînement 12 pour retrouver ladite position de mesure entre les deux curseurs. La touche de mesure peut alors suivre un profil de mesure tout en maintenant constant la force de mesure. Lors de ce positionnement automatique du curseur d'entraînement 12 par l'unité 35 au moyen des consignes de position 44, la consigne de vitesse fournie par l'une des touches 42 ou 43 amenant le curseur d'entraînement 12 vers la position de mesure est inhibée.

Par contre, la consigne de vitesse éloignant le curseur d'entraînement 12 de cette position de mesure peut être rendue active par l'une des touches 42 ou 43 pour inhiber l'asservissement automatique de position au moyen des consignes de position 44 et pour éloigner la touche de mesure 24 de la pièce à mesurer, par exemple lorsqu'on désire ôter cette dernière après avoir effectué la mesure.

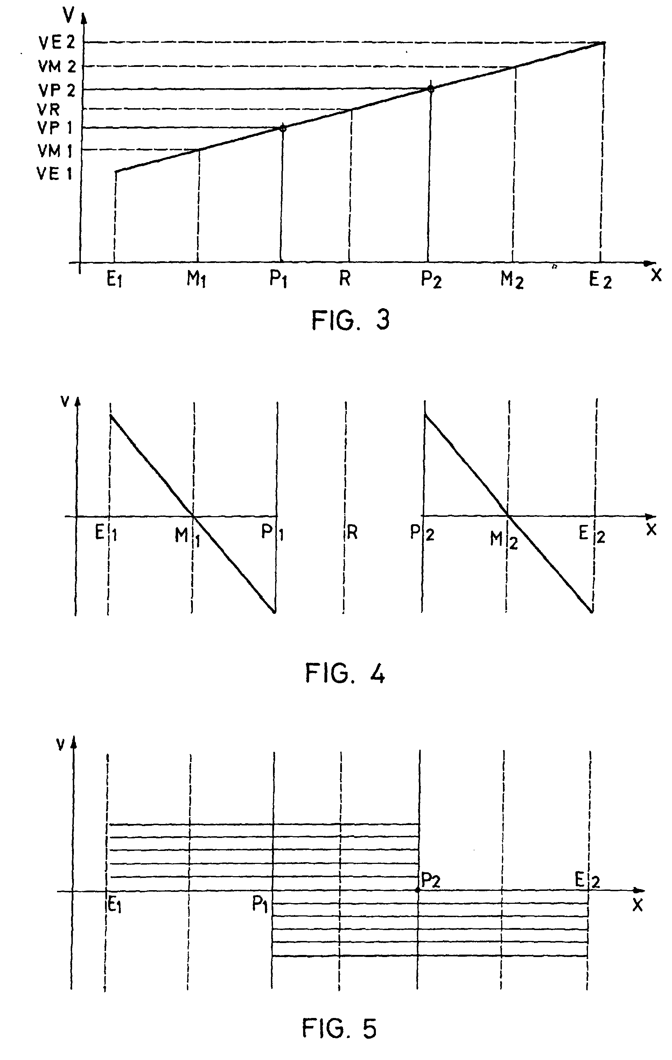

Les diagrammes des figures 3 à 5 permettent de visualiser plus précisément ce mode de fonctionnement.

Le diagramme de la figure 3 illustre les consignes de position sous forme de tensions fournies par le capteur à effet Hall 37 en fonction de la position relative x de l'aimant permanent 38 fixé sur le curseur d'entraînement 12.

Le diagramme de la figure 4 met en relation la vitesse v du moteur lorsqu'il est commandé par les consignes de position 44 en fonction de la position relative x.

Au centre dans la position de repos R des deux curseurs 12,20, le capteur 36 fournit une tension VR. Le déplacement du chariot 11 est effectué en fonction des consignes de vitesse produites par les touches 42,43. Lorsque la touche de mesure 24 entre en contact avec la pièce à mesurer soit par rotation arrière en montant ou par rotation avant en descendant, la position relative x varie dans un premier ou un second sens pour atteindre les positions P1 ou P2 correspondant à des valeurs de consignes limites VP1 ou VP2. A ce moment, les consignes de position 44 sont activées jusqu'à ce que la position relative x entre les deux curseurs 12,20 atteigne la position de mesure M1 ou M2. Dans les domaines P1-M1 et M2-E2, le moteur tourne en arrière pour atteindre les positons de mesure M1, respectivement M2, tandis que dans les domaines P2-M2 et M1-E1 le moteur tourne en avant pour atteindre les positions de mesure M2, respectivement M1. Dans ces positions de mesure M1, respectivement M2, correspondant à une approche de la pièce à mesurer par le bas en montant, respectivement par le haut en descendant, la vitesse du moteur est nulle et la force produite par le dispositif 25 sur la pièce à mesurer est égale à la force de mesure prédéterminée.

La figure 5 met en relation la vitesse v du moteur lorsqu'il est commandé par les consignes de vitesses provenant des touches 42,43 en fonction de la position relative x.

Dans le domaine entre les positions P1 et P2 le moteur peut être actionné librement en arrière ou en avant selon la vitesse désirée.

Dans le domaine P1-E1, la touche de mesure 24 est entrée en contact avec la pièce à mesurer par rotation arrière du moteur faisant monter le chariot 11. Dans ce domaine, la rotation arrière du moteur commandée par la touche 43 est inhibée, tandis que la rotation avant du moteur commandée par la touche 42 faisant descendre le chariot 11 peut être activée.

De façon inverse, dans le domaine P2-E2, la touche de mesure 24 est entrée en contact avec la pièce à mesurer par rotation avant du moteur en faisant descendre le chariot 11. Dans ce domaine, uniquement la rotation arrière du moteur commandée par la touche 43 montant le chariot 11 est possible pour pouvoir éloigner la touche 24 de la pièce à mesurer.

Le moteur 15 est de préférence à courant continu pour des raisons de simplicité de la commande électronique.

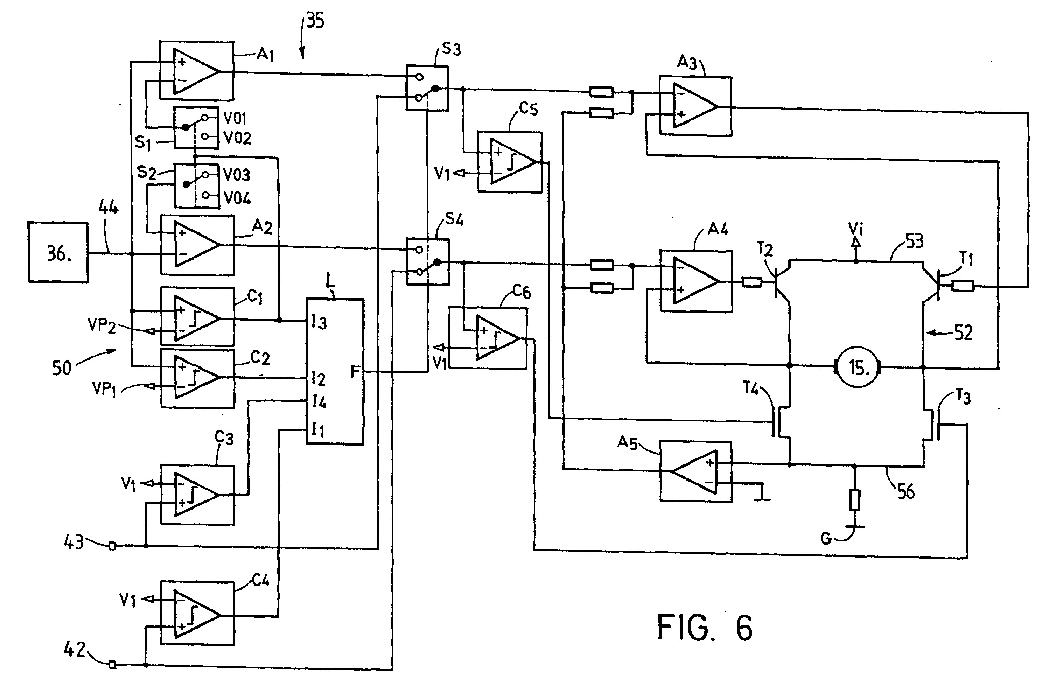

L'unité de commande 35 du moteur, dont le schéma électronique 50 est illustré à la figure 6, est réalisée en courant continu avec une seule tension d'alimentation Vi. Ce type de commande est particulièrement simple et d'un coût de revient faible.

Les consignes de vitesse sont fournies par les touches avant 42 et arrière 43 qui sont avantageusement du type piézoélectrique. La valeur de la tension de consigne de vitesse est ainsi proportionnelle à la pression exercée sur ces touches 42,43, ce qui permet une commande manuelle aisée et un déplacement rapide et précis du chariot 11. La vitesse du moteur résultant de l'action de ces touches 42,43, est représentée par des traits horizontaux dans le diagramme de la figure 5.

Les consignes de position sont fournies par le capteur de position 36 et leur valeur est amplifiée par l'amplificateur A1, dont le gain est positif, et par l'amplificateur A2, dont le gain est négatif (figure 6). L'amplificateur A1 fournit donc au moteur les consignes de fonctionnement amplifiée concernant les domaines P2-M2 et M1-E1 des figures 3 et 4 correspondant à une rotation avant du moteur, tandis que l'amplificateur A2 fournit les consignes de fonctionnement amplifiées concernant les domaines P1-M1 et M2-E2 correspondant à une rotation arrière du moteur.

Les tensions de décalage ou d'offset VO1 et VO2 de l'amplificateur A1 sont obtenus par le commutateur S1, ceux VO3 et VO4 de l'amplificateur A2 par le commutateur S2. La commutation des commutateurs S1 et S2 est commandée par la tension VP2 (voir figure 3) correspondant à la consigne de position de la limite supérieure P2 fournie par le capteur 36 et le comparateur C1, selon que la position relative x est comprise entre P1-E1 ou P2-E2 (figures 3 et 4).

La sélection entre la consigne de vitesse ou la consigne de position est effectuée par les commutateurs S3 et S4. Le circuit logique L détermine par son signal de sortie F la position des commutateurs S3 et S4 et comprend à cet effet les entrées

- I1 reliée à un comparateur C4 dont les entrées sont connectées à la touche 42 et à une tension V1 correspondant au seuil d'enclenchement du moteur 15,
- I4 reliée à un comparateur C3 dont les entrées sont connectées à la touche 43 et à la tension V1,
- I2 reliée à un comparateur C2 dont les entrées sont connectées à la consigne de position 44 donnée par le capteur de position 36 et à une tension égale à VP1 correspondant à la position relative P1,
- I3 reliée au comparateur C1 dont les entrées sont connectées à la consigne de position 44 et à une tension égale à VP2, correspondant à la position relative P2.

La logique de sélection des commutateurs S3 et S4 effectuée par le circuit logique L peut être représentée en logique de Boole par la formule :

$$\bar{F} = (I2.\overline{\overline{I3}}) + (I2.I3.I4) + (\overline{\overline{I2}}.\overline{\overline{I3}}.I1)$$

Lorsque $\bar{F} = 1$, le déplacement du chariot 11 est commandé par les touches 42 et 43, au contraire lorsque $\bar{\bar{F}} = 0$ le déplacement est commandé par le capteur de position 36.

Cette logique correspondant aux fonctions suivantes :

- inhibition de l'asservissement de positions 36 dans le domaine P1-P2.
- inhibition de la consigne de vitesse avant 42 dans le domaine P2-E2.
- inhibition de la consigne de vitesse arrière 43 dans le domaine P1-E1.
- Inhibition de l'asservissement de position 36 pour un dégagement avant dans le domaine P1-E1.
- Inhibition de l'asservissement de position 36 pour un dégagement arrière dans le domaine P2-E2.

Les consignes de tension sortant des commutateurs S3, respectivement S4, sont ensuite amenées à des amplificateurs différentiels A3, respectivement A4, dont les sorties sont reliées à la base de transistor T1, respectivement T2 d'une branche supérieure 53 d'un pont en H 52 connecté à une tension d'alimentation Vi et à une mise à la masse G. Ce pont comprend encore une branche inférieure 56 comportant également deux transistors T3 et T4. Le moteur 15 occupe le branchement central du pont en H 52. Dans les amplificateurs différentiels A3 et A4, la consigne de tension venant des commutateurs S3 et S4 est comparée à celle fournie au moteur 15. La tension du moteur 15 est donc asservie sur la consigne de tension venant des commutateurs S3 et S4. Le travail du pont en H 52 permet à la vitesse du moteur de varier positivement ou négativement.

Les consignes de tension sortant des commutateurs S3 et S4 sont également amenées à des comparateurs C5 et C6, dans lesquels elles sont comparées à la tension V1 correspondant au seuil d'enclenchement du moteur. Les sorties des comparateurs C5 et C6 sont reliées aux transistors T3 et T4 de la branche inférieure 56 du pont en H. Cette dernière est en outre connectée à l'entrée d'un amplificateur A5 dont la sortie est reliée aux entrées des amplificateurs A3 et A4.

Par ce montage on obtient un asservissement sur le courant du moteur 26 permettant de maintenir une vitesse stable de celui-ci sous différentes conditions de charge, sans pour autant intégrer un tachymètre. En effet, la tension dans la branche inférieure 56 du pont en H, proportionnelle au courant dans le moteur est amplifiée par l'amplificateur A5 et sommée à la consigne de tension sortant de S3 ou S4. Si le couple de charge du moteur augmente, son courant augmente et la tension sur le moteur également. On compense ainsi l'effet de la résistance interne du moteur qui a pour effet une diminution de la tension induite du rotor. Cet asservissement de courant est utile à basse vitesse où des variations du couple de charge entraînent des variations de vitesse importantes.

Ainsi, cette unité de commande 35 permet, grâce à un circuit logique L recevant des informations concernant la position relative x des deux curseurs 12,20 et agissant sur des commutateurs, de gérer de façon précise et fiable le fonctionnement du moteur commandé soit par l'utilisateur soit par le capteur de position résultant dans une interaction avantageuse entre les deux modes de fonctionnement.

Il est bien entendu que le mode de réalisation décrit ci-dessus ne présente aucun caractère limitatif et qu'il peut recevoir toutes modifications désirables à l'intérieur du cadre tel que défini par la revendication 1. En particulier, la colonne de l'instrument pourra être remplacée par tous supports verticaux, horizontaux ou de position quelconque, mais constituant un rail ou un moyen de guidage pour le chariot. Les curseurs de ce dernier pourront être remplacés par une première partie formant le chariot lui-même et une seconde partie constituée par une pièce de taille réduite susceptible d'être déplacée, par exemple par translation ou pivotement, par rapport au chariot. Entre les deux parties ou curseurs du chariot, d'autres organes, tels qu'un amortisseur ou un dispositif à contre-poids équilibrant le poids du curseur de mesure, pourraient être installés. Le ressort compensant le poids de la seconde partie pourrait dans certaines applications être supprimé.

Le dispositif produisant la force de mesure pourra présenter une toute autre construction; il pourrait, par exemple, être constitué par un doigt solidaire de la seconde partie disposée entre deux ressorts montés sur la première partie.

L'instrument pourrait être agencé de façon à effectuer la mesure seulement suivant une seule direction horizontale, verticale ou quelconque, par exemple en descendant sur la pièce à mesurer. Il ne comprendra alors qu'une seule position de mesure au lieu de deux.

D'autres capteurs de position, par exemple capacitifs, inductifs, optiques ou résistifs, seraient également utilisables.

On pourrait également utiliser un moteur d'un autre type, par exemple pas-à-pas, synchrone, à courant continu sans collecteur, etc.

La commande du moteur pourrait faire appel à d'autres techniques, telles que la modulation d'impulsions ou de fréquences. Les touches de commande 42,43 pourraient être remplacées par d'autres dispositifs de commande, tels que des potentiomètres, des périphériques informatiques, souris, trackball, joy stick, ou des commandes digitales.

L'instrument selon l'invention peut facilement être intégré dans les installations travaillant suivant plusieurs axes ou des instruments adaptés à la mesure d'angles.

**Revendications**

1. Instrument pour mesurer des longueurs ou des angles comprenant un rail (10), un chariot (11) disposé sur ce rail, le chariot (11) présentant une première partie (12) susceptible d'être entraînée le long de ce rail (10) et une seconde partie (20) entraînée par la première partie (12) le long du rail et portant une touche de mesure (24) destinée à coopérer avec une pièce à mesurer, la seconde partie (20) étant susceptible d'être déplacée par rapport à la première partie (12) contre l'effet d'un élément de retenue (25) d'une position de repos (R) vers au moins une position de mesure (M1, M2) dans laquelle la touche de mesure (24) exerce une force de mesure prédéterminée sur la pièce à mesurer, l'instrument comprenant un organe moteur (15) agencé de façon à entraîner la première partie (12) le long du rail (10), un capteur de position (36) susceptible de mesurer le déplacement relatif (x) entre les deux parties (12, 20) du chariot, et une unité de commande (35) comprenant des premiers et seconds moyens de commande (36, A1, A2; 42, 43), les premiers moyens de commande (36, A1, A2) étant agencés de façon à recevoir des signaux (44) correspondant à la position relative (x) entre les deux parties (12, 20) dudit capteur de position (36) et à commander au moyen de premières consignes avant ou arrière l'organe moteur (15) de manière qu'il établisse une position relative constante entre les deux parties (12, 20) correspondant à la position de mesure (M1, M2), les seconds moyens de commande (42, 43) étant susceptibles de recevoir des instructions extérieures et de commander au moyen de secondes consignes avant ou arrière l'organe moteur (15) de manière à déplacer la première partie (12) au moins lorsque la seconde partie (20) occupe ladite position de repos (R), **caractérisé par le fait que** l'unité de commande est agencée

   a) de façon à rendre actifs les seconds moyens de commande (42, 43) lorsque lesdits signaux (44) reçus du capteur de position (36) sont inférieurs à une limite supérieure (VP2) et supérieurs à une limite inférieure (VP1),

   b) de façon à rendre actifs les premiers moyens de commande (36, A1, A2), lorsque lesdits signaux (44) reçus du capteur de position (36) sont soit supérieurs à la limite supérieure (VP2) pour établir une première position de mesure (M2) entre les deux parties du chariot, soit inférieurs à la limite inférieure (VP1) pour obtenir une seconde position de mesure (M1) entre les deux parties du chariot,

   c) de façon à inhiber la seconde consigne avant lorsque lesdits signaux reçus (44) sont supérieurs à la limite supérieure (VP2),

   d) de façon à inhiber la seconde consigne arrière lorsque lesdits signaux reçus (44) sont inférieurs à la limite inférieure (VP1) et

   e) de façon à inhiber les premières consignes avant et arrière soit lorsque les signaux reçus (44) sont inférieurs à la limite inférieure (VP1) et que la seconde consigne avant est activée, soit lorsque les signaux reçus (44) sont supérieurs à la limite supérieure (VP2) et que la seconde consigne arrière est activée.

2. Instrument selon la revendication 1, **caractérisé par le fait que** le capteur de position (36) est agencé de façon à travailler avec une grandeur physique variant sensiblement linéairement avec le déplacement relatif (x) entre les deux parties (12, 20) du chariot.

**3.** Instrument selon la revendication 2, **caractérisé par le fait que** le capteur de position (36) est un capteur à effet Hall (37).

**4.** Instrument selon l'une des revendications 1 à 3, **caractérisé par le fait que** les seconds moyens de commande comportent deux boutons de commande (42, 43) agencés de façon à émettre des consignes de vitesse avant, respectivement arrière, correspondant à des vitesses de rotation avant, respectivement arrière, croissantes de l'organe moteur avec la pression croissante exercée sur ces boutons.

**5.** Instrument selon la revendication 4, **caractérisé par le fait que** les boutons (42, 43) comportent des éléments piézoélectriques.

**6.** Instrument selon l'une des revendications 1 à 5, **caractérisé par le fait que** l'unité de commande (35) comprend un circuit logique (L) coopérant au moins avec deux premiers comparateurs (C1, C2) agencés de façon à comparer les signaux reçus (44) du capteur de position (36) avec lesdites limites supérieure et inférieure (VP2, VP1) et agencés de façon à actionner au moins deux premiers commutateurs (S3, S4) ayant chacun une première entrée susceptible de recevoir lesdits premières consignes, une seconde entrée susceptible de recevoir lesdites secondes consignes, et une sortie agencée de façon à commander la rotation de l'organe moteur (15).

**7.** Instrument selon la revendication 6, **caractérisé par le fait que** les signaux reçus (44) du capteur (36) sont amenés à une première entrée de deux premiers amplificateurs (A1, A2) dont les gains sont inversés l'un par rapport à l'autre, dont la sortie de chacun est reliée à l'un des premiers commutateurs (S3, S4) et dont la seconde entrée est susceptible d'être reliée pour chacun à une première ou une seconde tension de décalage (VO1, VO2; VO3, V04), deux seconds commutateurs (S1, S2) commandés par l'un des premiers comparateurs (C1, C2) étant destinés à commuter la seconde entrée entre la première et seconde tension de décalage selon que la position de mesure est supérieure ou inférieure audites limites (VP1, VP2).

**8.** Instrument selon la revendication 6 ou 7, **caractérisé par le fait que** l'organe moteur est un moteur à courant continu (15) et que l'unité de commande (35) comprend un circuit électronique (50) à courant continu.

**9.** Instrument selon la revendication 8, **caractérisé par le fait que** le moteur (15) est branché au centre d'un pont en H (52) dont la branche supérieure (53) est reliée par l'intermédiaire de deux seconds amplificateurs (A3, A4) aux premiers commutateurs (S3, S4) et dont la branche inférieure (56) est reliée à ces derniers par l'intermédiaire de deux seconds comparateurs (C5, C6) destinés à comparer les consignes sortant des premiers commutateurs (S3, S4) à un seuil d'enclenchement (V1) du moteur (15).

**10.** Instrument selon la revendication 9, **caractérisé en ce que** ladite branche inférieure (56) est reliée à un troisième amplificateur (A5) dont la sortie est reliée aux entrées desdits seconds amplificateurs (A3, A4) de façon à assurer une vitesse stable du moteur (15) sous différentes conditions de charge.

**11.** Instrument selon l'une des revendications précédentes, **caractérisé par le fait que** la première partie du chariot (11) est constituée par un premier curseur (12) monté coulissant sur le rail (10) et que la seconde partie est constituée par un second curseur (20) monté coulissant sur le premier curseur (12) ou sur le rail (10).

**Patentansprüche**

**1.** Längen- oder Winkelmessinstrument mit einer Schiene (10), einem auf dieser Schiene angeordneten Schlitten (11), wobei der Schlitten (11) einen ersten Abschnitt (12), der entlang dieser Schiene (10) bewegt werden kann, sowie einen zweiten Abschnitt (20) aufweist, der durch den ersten Abschnitt (12) entlang dieser Schiene bewegt werden kann und eine Messspitze (24) trägt, die dafür bestimmt ist, mit einem zu messenden Teil zusammenzuwirken, und wobei der zweite Abschnitt (20) relativ zum ersten Abschnitt (12) entgegen der Wirkung eines Rückhalteelements (25) von einer Ruheposition (R) zu mindestens einer Messposition (M1, M2) verschoben werden kann, in der die Messspitze (24) eine vorbestimmte Messkraft auf das zu messende Teil ausübt, während das Instrument ein Antriebsorgan (15), das so ausgelegt ist, dass der erste Abschnitt (12) entlang der Schiene (10) bewegt wird, einen Positionsfühler (36), der die relative Verschiebung (x) zwischen den beiden Abschnitten (12, 20) des Schlittens messen kann, sowie eine Steuereinheit (35) enthält, die erste und zweite Steuerorgane (36, A1, A2; 42, 43) umfasst, wobei die ersten Steuerorgane (36, A1, A2) so ausgelegt sind, dass sie Signale (44) empfangen, die der relativen Position (x) der beiden Abschnitte (12, 20) dieses Positionsfühlers (36) entsprechen, und das Antriebsorgan (15) vermittels erster Vorwärts- oder Rückwärtsbefehle so steuern, dass es eine konstante relative Lage der beiden Abschnitte (12, 20) herstellt, die der Messposition (M1, M2) entspricht, wobei die zweiten Steuerorgane (42, 43) in der Lage sind, Befehle von aussen zu empfangen und das Antriebsorgan (15) vermittels zweiter Vorwärts- oder Rückwärtsbefehle so zu steuern, dass der erste Abschnitt (12) wenigstens dann verschoben wird, wenn der zweite Abschnitt (20) diese Ruheposition (R) einnimmt, **dadurch gekennzeichnet, dass** die Steuereinheit so ausgelegt ist, dass

a) die zweiten Steuerorgane (42, 43) aktiviert werden, wenn diese vom Positionsfühler (36) empfangenen Signale (44) kleiner als eine Obergrenze (VP2) und grösser als eine Untergrenze (VP1) sind,
b) die ersten Steuerorgane (36, A1, A2) aktiviert werden, wenn diese vom Positionsfühler (36) empfangenen Signale (44) entweder grösser als die Obergrenze (VP2) sind, um eine erste Messposition (M2) zwischen den beiden Abschnitten des Schlittens aufzubauen, oder kleiner als die Untergrenze (VP1) sind, um eine zweite Messposition (M1) zwischen den beiden Abschnitten des Schlittens zu erhalten,
c) der zweite Vorwärtsbefehl gesperrt wird, wenn diese empfangenen Signale (44) grösser als die Obergrenze (VP2) sind,
d) der zweite Rückwärtsbefehl gesperrt wird, wenn diese empfangenen Signale (44) kleiner als die Untergrenze (VP1) sind,
e) der erste Vorwärts- und der erste Rückwärtsbefehl gesperrt wird, wenn entweder die empfangenen Signale (44) kleiner als die Untergrenze (VP1) sind und der zweite Vorwärtsbefehl aktiviert ist oder wenn die empfangenen Signale (44) grösser als die Obergrenze (VP2) sind und der zweite Rückwärtsbefehl aktiviert ist.

2. Instrument nach Anspruch 1, **dadurch gekennzeichnet, dass** der Positionsfühler (36) dafür ausgelegt ist, mit einer physikalischen Grösse zu arbeiten, die im Wesentlichen linear mit der relativen Verschiebung (x) der beiden Abschnitte (12, 20) des Schlittens variiert.

3. Instrument nach Anspruch 2, **dadurch gekennzeichnet, dass** der Positionsfühler (36) eine Hall-Sonde (37) ist.

4. Instrument nach einem der Ansprüche 1 bis 3, **dadurch gekennzeichnet, dass** die zweiten Steuerorgane zwei Schaltknöpfe (42, 43) haben, die so ausgelegt sind, dass Sollwerte der Vorwärts- bzw. Rückwärtsgeschwindigkeit ausgegeben werden, die einer Vorwärts- bzw. Rückwärtsdrehgeschwindigkeit des Antriebsorgans entsprechen, die mit steigendem Druck auf diese Knöpfe ansteigt.

5. Instrument nach Anspruch 4, **dadurch gekennzeichnet, dass** die Knöpfe (42, 43) piezoelektrische Elemente enthalten.

6. Instrument nach einem der Ansprüche 1 bis 5, **dadurch gekennzeichnet, dass** die Steuereinheit (35) eine logische Schaltung (L) enthält, die zumindest mit zwei ersten Komparatoren (C1, C2) zusammenwirkt, die so ausgelegt sind, dass sie die vom Positionsfühler (36) empfangenen Signale (44) mit dieser Ober- und Untergrenze (VP2, VP2) vergleichen und dass sie zumindest zwei erste Umschalter (S3, S4) aktivieren, deren jeder einen ersten Eingang, der diese ersten Befehle empfangen kann, einen zweiten Eingang, der diese zweiten Befehle empfangen kann, sowie einen Ausgang besitzt, der so ausgelegt ist, dass er die Drehung des Antriebsorgans (15) steuert.

7. Instrument nach Anspruch 6, **dadurch gekennzeichnet, dass** die vom Fühler (36) empfangenen Signale (44) an einen ersten Eingang von zwei ersten Verstärkern (A1, A2) angelegt werden, deren Verstärkungen einander entgegengesetzt sind, deren Ausgänge mit jeweils einem der ersten Umschalter (S3, S4) verbunden sind und deren zweite Eingänge mit jeweils einer ersten oder einer zweiten Offsetspannung (VO1, V02; V03, V04) verbunden werden können, wobei zwei durch einen der ersten Komparatoren (C1, C2) gesteuerte zweite Umschalter (S1, S2) dafür bestimmt sind, je nachdem, ob die Messposition über oder unter diesen Grenzen (VP1, VP2) liegt, den zweiten Eingang zwischen der ersten und zweiten Offsetspannung umzuschalten.

8. Instrument nach Anspruch 6 oder 7, **dadurch gekennzeichnet, dass** das Antriebsorgan ein Gleichstrommotor (15) ist und dass die Steuereinheit (35) eine elektronische Gleichstromschaltung (50) umfasst.

9. Instrument nach Anspruch 8, **dadurch gekennzeichnet, dass** der Motor (15) an die Mitte einer H-Brücke (52) angeschlossen ist, deren oberer Zweig (53) über zwei zweite Verstärker (A3, A4) mit den ersten Umschaltern (S3, S4) verbunden ist und deren unterer Zweig (56) mit letzteren über zwei zweite Komparatoren (C5, C6) verbunden ist, die dafür bestimmt sind, die Ausgangsbefehle der ersten Umschalter (S3, S4) mit einer Einschaltschwelle (V1) des Motors (15) zu vergleichen.

10. Instrument nach Anspruch 9, **dadurch gekennzeichnet, dass** dieser untere Zweig (56) mit einem dritten Verstärker (A5) verbunden ist, dessen Ausgang so an die Eingänge dieser zweiten Verstärker (A3, A4) angeschlossen ist, dass unter unterschiedlichen Bedingungen der Belastung eine stabile Geschwindigkeit des Motors (15) gewährleistet ist.

11. Instrument nach einem der vorangehenden Ansprüche, **dadurch gekennzeichnet, dass** der erste Abschnitt des Schlittens (11) aus einem gleitend auf die Schiene (12) montierten Läufer (12) besteht und dass der zweite Abschnitt aus einem gleitend auf den ersten Läufer (12) oder auf die Schiene (10) montierten zweiten Läufer (20) besteht.

**Claims**

1. Instrument for measuring lengths or angles comprising a rail (10), a carriage (11) disposed on said rail, the carriage (11) having a first portion (12) adapted to be driven along the rail (10) and a second portion (20) driven by the first portion (12) along the rail and carrying a measuring contact (24) adapted to coact with a piece to be measured the second portion (20) being adapted to be displace relative to the first portion (12) against the force of a retention element (25) from a rest position (R) toward at least one measuring position (M1, M2) in which the measuring contact (24) exerts a predetermined measuring force on the piece to be measured, the instrument comprising motor means (15) arranged to drive the first portion (12) along the rail (10), a position detector (36) adapted to measure the relative displacement (x) between the two portions (12, 20) of the carriage, and a control unit (35) comprising first and second control means (36, A1, A2; 42, 43), the first control means (36, A1, A2) being arranged to receive signals (44) corresponding to the relative position (x) between the two portions (12, 20) of said position detector (36) and to control by means of first forward or reverse settings the motor means (15) such that it establishes a constant relative position between the two portions (12, 20) corresponding to the measuring position (M1, M2), the second control means (42, 43) being adapted to receive external instructions and to control by means of second forward or reverse settings the motor means (15) so as to displace the first portion (12) when the second portion (20) occupies said rest position (R), **characterized by** the fact that the control unit is arranged

   a) so as to render active second control means (42, 43) when said signals (44) received from the position detector (36) are lower than an upper limit value (VP2) and greater than a lower limit (VP1),

   b) so as to render active the first control means (36, A1, A2), when said signals (44) received from the position detector (36) are either above the upper limit (VP2) to establish a first measuring position (M2) between the two portions of the carriage, or below the lower limit (VP1) to obtain a second measuring position (M1) between the two portions of the carriage,

   c) so as to inhibit the second forward setting when said received signals (44) are higher than the upper limit (VP2),

   d) so as to inhibit the second reverse setting when said received signals (44) are below the lower limit (VP1), and

   e) so as to inhibit the first forward and reverse settings even when the received signals (44) are below the lower limit (VP1) and the second forward setting is actuated, or when the received signals (44) are above the upper limit (VP2) and the second reverse setting is actuated.

2. Instrument according to claim 1, **characterized by** the fact that the position detector (36) is arranged so as to operate with a physical size varying substantially linearly with the relative displacement (x) between the two portions (12, 20) of the carriage.

3. Instrument according to claim 2, **characterized by** the fact that the position detector (36) is a Hall effect detector (37).

4. Instrument according to one of the claims 1 to 3, **characterized by** the fact that second control means comprise two control buttons, (42, 43) arranged so as to emit forward speed settings and respectively reverse speed settings, corresponding to forward speeds of rotation respectively reverse speeds of rotation of the motor means, which increase with increasing pressure exerted on these buttons.

5. Instrument according to claim 4, **characterized by** the fact that the buttons (42, 43) comprise piezoelectric elements.

6. Instrument according to one of the claims 1 to 5, **characterized by** the fact that the control unit (35) comprises a logic circuit (L) coacting with at least first comparators (C1, C2) arranged so as to compare the signals (44) received from the position detector (36) with said upper and lower limits (VP1, VP2) and arranged so as to actuate at least two first switches (S3, S4) each having a first inlet adapted to receive said first settings, a second inlet adapted to receive said second settings, and an output arranged so as to control the rotation of the motor means (15).

7.  Instrument according to claim 6, **characterized by** the fact that the signals (44) received from the detector (36) are brought to a first input of two first amplifiers (A1, A2) whose gains are inverted relative to each other, the output of each amplifier being connected to one of the first switches (S3, S4) and the second input being adapted to be connected for each to a first or a second lag voltage (VO1, VO2; VO3, VO4), two second switches (S1, S2) controlled by one of the first comparators (C1, C2) being adapted to switch the second input between the first and second lag voltage according to whether the measuring position is above or below said limits (VP1, VP2).

8.  Instrument according to claim 6 or 7, **characterized by** the fact that the motor means are a DC motor (15) and the control unit (35) comprises an electronic DC circuit (50).

9.  Instrument according to claim 8, **characterized by** the fact that the motor (15) is connected to the center of an H-shaped bridge (52) whose upper leg (53) is connected by means of two second amplifiers (A3, A4) to the first switches (S3, S4) and whose lower leg (56) is connected to these latter by means of two second comparators (C5, C6) intended to compare the settings leaving the first switches (S3, S4) to a start up threshold (V1) of the motor (15).

10. Instrument according to claim 9, **characterized in that** said lower branch (56) is connected to a third amplifier (A5) whose output is connected to the inputs of said second amplifiers (A3, A4) so as to ensure a stable speed of the motor (15) under different conditions of load.

11. Instrument according to one of the preceding claims, **characterized by** the fact that the first portion of the carriage (11) is constituted by a first cursor (12) mounted slidably on the rail (10) and the second portion is constituted by a second cursor (20) mounted slidably on the first cursor (12) or on the rail (10).

FIG. 1

FIG. 2

FIG. 3

FIG. 4

FIG. 5

FIG. 6

EP 0 816 795 B1